# EUROPEAN PATENT APPLICATION

(11) **EP 1 921 420 A1**
(43) Date of publication of application: **14.05.2008**
(21) Application number: 07119493.0
(22) Date of filing: 29.10.2007
(51) Int. Cl.: G01C 21/32, H04N 1/32, H04N 1/21

(54) **Image navigation device**

(30) Priority: 09.11.2006 JP 2006009129 U
(71) Applicant: Tekom Technologies, Inc., 235 Junghe City, Taipei (TW)
(72) Inventor: Tsai, Tien-Chin, Junghe City, Taipei 235 (TW)
(74) Representative: Beck & Rössig European Patent Attorneys

(57) **Abstract**

A navigation device obtains real-time coordinates of an image for positioning. Data of the image are then transferred by a terminal to be analyzed. A route is thus obtained for navigation between position of the image and position of the terminal. The navigation device is able to navigate without a pre-installed map; but by using a route data from the Internet.

## Description

### Field of the invention

The present invention relates to navigation; more particularly, relates to obtaining coordinates of an image for positioning to be transferred to a data providing unit by a terminal to be analyzed to obtain a route for navigation between position of the image and position of the terminal.

### Description of the Related Arts

A general mobile device, such as a notebook, a PDA, a mobile phone, etc., is integrated with devices for communication, photography, navigation, data mining and Internet surfing so that multiple utilizations are possible to a user with the mobile device.

Although data transferring, photographing, map navigating, Internet surfing, etc. are possible for the user with the mobile device, only one function among them can be used at a time. A map navigation in a general mobile device is done only in its own map database which requires update after a period of time of use and is not so convenient. Additionally, when a photo is taken by the mobile device, only date and time are recorded as references; but not related data for the user to approach the position of the photo with navigation information. Hence, the prior arts do not fulfill users' requests on actual use.

### Summary of the invention

The main purpose of the present invention is to obtain real-time coordinates of an image for positioning; then to transfer data of the image to a data providing unit by a terminal to be analyzed to obtain a route for navigation between position of the image data and position of the terminal.

To achieve the above purpose, the present invention is an image navigation device, comprising an image shooting device, where the image shooting device comprises a lens unit, a processing unit, a positioning unit and a storage unit to acquire and position coordinates of an image data; a terminal, where the terminal comprises a receiving unit, a first connection unit and a display unit to receive and transfer the image data; and a data providing unit, where the data providing unit connects to the terminal to provide route data between position of the image data and position of the terminal. Accordingly, a novel image navigation device is obtained.

### Brief descriptions of the drawings

The present invention will be better understood from the following detailed description of the preferred embodiment according to the present invention, taken in conjunction with the accompanying drawings, in which
- FIG.1: is the perspective view showing the preferred embodiment according to the present invention;
- FIG.2: is the main block view;
- FIG.3: is the detail black view;
- FIG.4: is the perspective view of the state of use; and
- FIG.5: is the block view of the state of use.

### Description of the preferred embodiment

The following description of the preferred embodiment is provided to understand the features and the structures of the present invention.

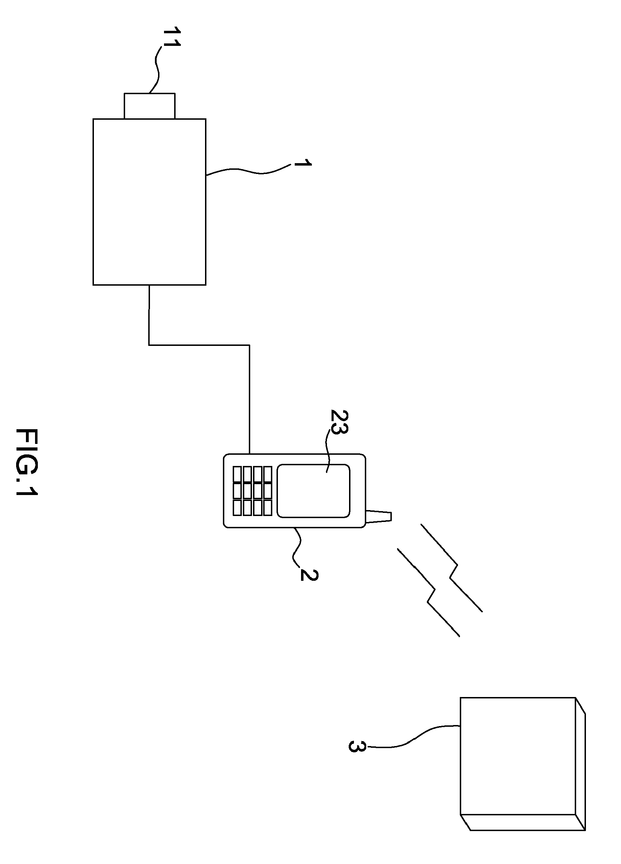

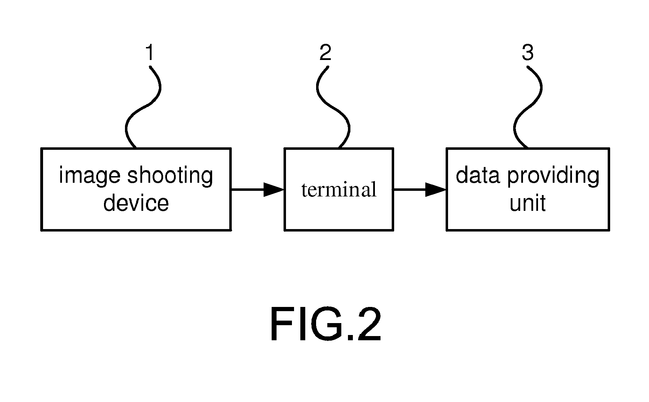

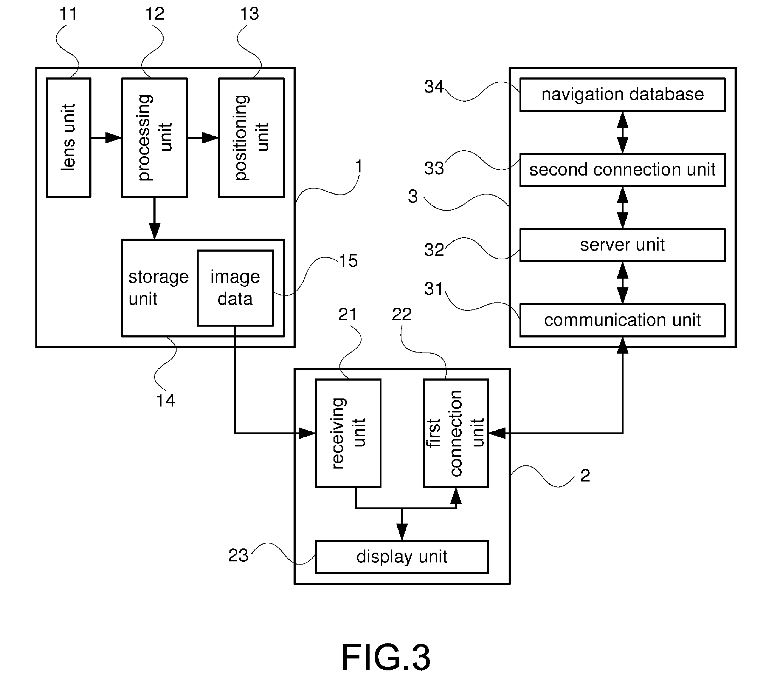

Please refer to FIG.1 to FIG.3, which are a perspective view, a main block view and a detail black view showing a preferred embodiment according to the present invention. As shown in the figure, the present invention is an image navigation device, comprising an image shooting device 1, a terminal 2 and a data providing unit 3, where position information of an image shot by the image shooting device 1 is obtained at a real time; data of the image is transferred by the terminal 2 to the data providing unit 3 to be analyzed; and a route between position of the image data and position of the terminal 2 is thus obtained for a navigation.

The image shooting device 1 comprises a lens unit 11; a processing unit 12 connected with the lens unit 11; a positioning unit 13 connected with the processing unit 12; and a storage unit 14 connected with the processing unit 12, where the positioning unit 13 is a global positioning system (GPS) to provide coordinates of longitude, latitude and height for the image data 15; and the storage unit stores data of the image data, comprising a date, a time, and the coordinates of longitude, latitude and height for the image data. Thus, a real-time coordinates of the storage unit 14 is acquired and positioned; and a user's position is also known. The user can also trace a route when activating the positioning unit; and output a route file to be recorded.

The terminal 2 is a computer, a PDA or a mobile phone; the terminal 2 comprises a receiving unit 21, a first connection unit 22 and a display unit 23; and the terminal 2 receives and transfers the image data 15 in the image shooting device 1.

The data providing unit 3 is connected with the terminal 2; the data providing unit 3 provides data of a route between position of the image data and position of the terminal 2; and the data providing unit 3 comprises a communication unit 31, being connected with the first connection unit 22 of the terminal 2, a server unit 32, authenticating the terminal 2, and a navigation database 34, providing the image data 15 by connecting to the server unit 32 through the second connection unit 33. Thus, a novel image navigation device is obtained with the above structure.

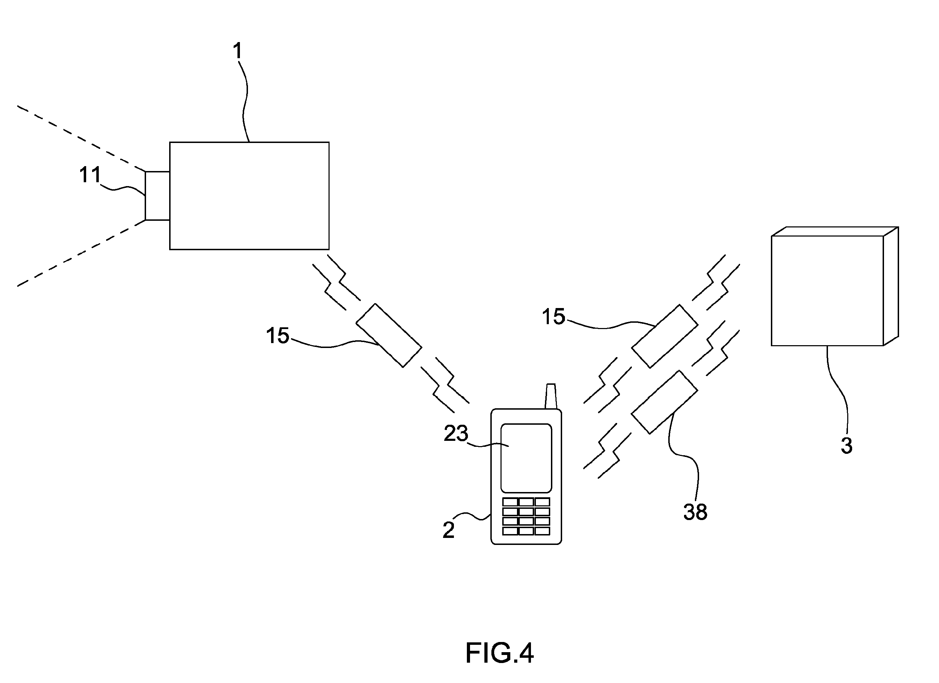

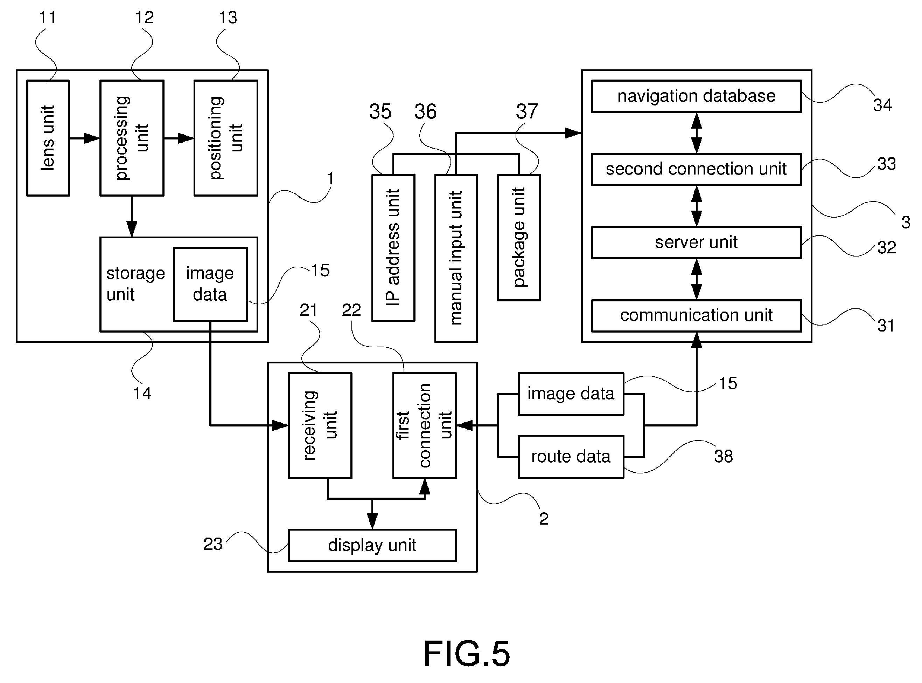

Please refer to FIG.4 and FIG.5, which are a perspective view and a block view of a state of use. As shown in the figures, when using the present invention, a lens unit 11 of an image shooting device 1 shoots an image. When the image shooting device 1 shoots the image, a time, a date and coordinates of longitude, latitude and height for the image are obtained by a positioning unit 13 to be stored as an image data 15 in a storage unit 14. Then the image data 15 is transferred through an email, a web page, a marketing media (e.g. CD-rom), an instant messaging software (e.g. MSN), a memory card, etc. to be received by a terminal 2 from a receiving unit 21. When a position information of the image data 15 is used to find a path between position of the image data 15 and position of the terminal 2, a first connection unit 22 of the terminal 2 is connected with a communication unit 31 of a data providing unit 3; after passing an authentication of a server unit 32, the image data 15 is transferred to a navigation database 34 through a second connection unit 33; a real-time position of the terminal 2 is obtained by an IP address unit 35, a manual input unit 36 and a package unit 37; and the coordinates of longitude, latitude and height for the image data 15 are analyzed to find route data 38 between the position of the image data and the position of the terminal 2. The route data 38 is transferred to the terminal 2 to be received by the connection unit 22 and displayed on the display unit 23 for the user to approach the position of the image data 15 with the route data 38. In short, the position of the image data 15 is definitely and accurately obtained on shooting an image of the image data 15. The image shot by the image shooting device 1 is then transformed into the image data 15 having position information, positioning data or route data. And the image data 15 is analyzed through the data providing unit 3 to obtain the route data 38 for the navigation with the image data 15. Alternatively, the functions of the data providing unit 3 can be integrated into the terminal 2 for analyzing navigation route without using the Internet.

To sum up, the present invention is an image navigation device, where coordinates of an image are obtained for positioning; and data of the image are transferred to a data providing unit by a terminal to be analyzed to obtain a route for navigation between position of the image data and position of the terminal.

The preferred embodiment herein disclosed is not intended to unnecessarily limit the scope of the invention. Therefore, simple modifications or variations belonging to the equivalent of the scope of the claims and the instructions disclosed herein for a patent are all within the scope of the present invention.

## Claims

1. An image navigation device, comprising:
an image shooting device, said image shooting device acquiring and
positioning coordinates of an image data, said image shooting device comprising:
a lens unit;
a processing unit being connected with said lens unit;
a positioning unit being connected with said processing unit; and
a storage unit being connected with said processing unit;
a terminal, said terminal receiving and transferring said image data, said terminal comprising
a receiving unit;
a connection unit; and
a display unit; and
a data providing unit, said data providing unit connecting to said terminal to provide route data between position of said image data and position of said terminal.

2. The device according to claim 1,
wherein said positioning unit is a global positioning system (GPS).

3. The device according to claim 1,
wherein said positioning unit obtains coordinates of longitude, latitude and height for said image data.

4. The device according to claim 1,
wherein said storage unit stores data of said image data, comprising a date, a time, and coordinates of longitude, latitude and height.

5. The device according to claim 1,
wherein said terminal is selected from a group consisting of a computer, a PDA and a mobile phone.

6. The device according to claim 1,
wherein said data providing unit obtains position of said terminal through an IP address unit, a manual input unit and a package unit.

7. The device according to claim 1,
wherein said data providing unit comprises
a communication unit connecting to said terminal;
a server unit authenticating said terminal; and
a navigation database providing said image data by connecting to said server unit through said connection unit.

8. An image navigation device, comprising:
an image shooting device, said image shooting device shooting a requested image, said image shooting device acquiring and
positioning coordinates of said requested image, said image shooting device comprising
a processing unit being connected with said lens unit;
a positioning unit being connected with said processing unit; and
a storage unit being connected with said processing unit; and
a terminal, said terminal receiving and transferring image data and
providing route data between position of said image data and position of said terminal, said terminal comprising
a receiving unit;
a connection unit;
a display unit; and
a data providing unit.
